# EUROPÄISCHE PATENTANMELDUNG

(11) **EP 1 199 400 A2**
(43) Veröffentlichungstag der Anmeldung: **24.04.2002**
(21) Anmeldenummer: 01125006.5
(22) Anmeldetag: 19.10.2001
(51) Int. Cl.: D06N 3/14, D06N 3/00, C09D 175/04, C08K 3/00

(54) **Wässrige polyurethanhaltige Beschichtungszusammensetzung für textile Flächengebilde**

(30) Priorität: 20.10.2000 DE 20018014 U
(71) Anmelder: ROTTA GmbH, 68169 Mannheim (DE)
(72) Erfinder: Wittmann, Siegfried, 67592 Flörsheim-Dalsheim (DE); Rotta, Götz, 69469 Weinheim (DE)
(74) Vertreter: Kinzebach, Werner, Dr.

(57) **Zusammenfassung**

Beschrieben wird eine wässrige Beschichtungszusammensetzung, die folgende Bestandteile aufweist:
a) ein Polyurethan in Form einer wässrigen Dispersion von Polymerpartikeln,
b) gegebenenfalls ein oder mehrere davon verschiedene Polymere in Form einer wässrigen Polymerdispersion in einer Menge von 0 bis 100 Gew.-Teilen bezogen auf 100 Gew.-Teile der Komponente a),
c) wenigstens ein keramisches Pulver mit einer Teilchengröße von 0,1 bis 10 µm in einer Menge von 5 bis 150 Gew.-Teilen bezogen auf 100 Gew.-Teile Polymerbestandteile der Komponenten a) plus b),
d) gegebenenfalls Hohlkugeln mit einem Außendurchmesser im Bereich von 5 bis 200 µm in einer Menge von 0 bis 80 Gew.-Teilen bezogen auf 100 Gew.-Teile Polymerbestandteile der Komponenten a) plus b),
e) gegebenenfalls Farbmittel,
f) Wasser, das bis zu 50 Gew.-% mit Wasser mischbare organische Lösungsmittel enthalten kann, sowie gegebenenfalls übliche Hilfsmittel.
und deren Verwendung zur Herstellung eines beschichteten textilen Flächengebildes.

## Beschreibung

Die vorliegende Anmeldung betrifft wässrige Beschichtungszusammensetzungen für textile Flächengebilde. Sie betrifft außerdem ein Verfahren zur Herstellung beschichteter textiler Flächengebilde und die mit diesen Beschichtungszusammensetzungen beschichteten textilen Flächengebilde.

Der vorliegenden Anmeldung liegt die Aufgabe zugrunde, wässrige Beschichtungszusammensetzungen für textile Flächengebilde bereit zu stellen, die außerordentlich abriebfest sind. Sie sollten außerdem vorzugsweise Schutz vor UV-Strahlung und eine gute Wärmeisolation bieten, sowie nach Möglichkeit atmungsaktiv sein. Außerdem sollten sie einfach zu handhaben sein.

Diese Aufgabe wird durch wässrige Beschichtungszusammensetzungen gelöst, die wenigstens ein Polyurethan in Form einer wässrigen Polyurethandispersion und wenigstens ein keramisches Pulver mit einer Teilchengröße im Bereich von 0,1 bis 10 µm im einer Menge von 5 bis 150 Gewichtsteilen, bezogen auf 100 Gewichtsteile Polymerbestandteile, im Beschichtungsmittel enthalten.

Die vorliegende Erfindung betrifft daher wässrige Beschichtungszusammensetzungen für textile Flächengebilde, die folgende Bestandteile umfassen:
a) ein Polyurethan in Form einer wässrigen Dispersion von Polymerpartikeln,
b) gegebenenfalls ein oder mehrere davon verschiedene Polymere in Form einer wässrigen Polymerdispersion in einer Menge von 0 bis 100 Gew.-Teilen bezogen auf 100 Gew.-Teile der Komponente a),
c) wenigstens ein keramisches Pulver mit einer Teilchengröße von 0,1 bis 10 µm in einer Menge von 5 bis 150 Gew.-Teilen, vorzugsweise 5 bis 50 Gew.-Teilen, bezogen auf 100 Gew.-Teile Polymerbestandteile der Komponenten a) plus b),
d) gegebenenfalls Hohlkugeln mit einem Außendurchmesser im Bereich von 5 bis 200 µm in einer Menge von 0 bis 80 Gew.-Teilen, vorzugsweise bis zu 40 Gew.-Teilen, bezogen auf 100 Gew.-Teile Polymerbestandteile der Komponenten a) plus b),
e) gegebenenfalls Farbmittel,
f) Wasser, das bis zu 50 Gew.-% mit Wasser mischbare organische Lösungsmittel enthalten kann, sowie gegebenenfalls übliche Hilfsmittel.

Die in den erfindungsgemäßen Beschichtungszusammensetzungen als Komponente a) enthaltenen Polyurethane sind in der Regel Additionsprodukte aus wenigstens einer Isocyanat-Komponente, die wenigstens ein Diisocyanat umfasst, und wenigstens einer Polyol-Komponente, die wenigstens ein Diol umfasst. Darüber hinaus kann die Isocyanat-Komponente auch höherfunktionelle Isocyanate, z. B. Triisocyante oder oligomere Isocyanate, die im Mittel mehr als 2 und vorzugsweise 3 oder mehr Isocyanatgruppen aufweisen, umfassen. Die Polyol-Komponente kann auch höherfunktionelle Polyole oder oligomere Polyole enthalten, die im Mittel mehr als 2 OH-Gruppen, vorzugsweise 3 oder mehr OH-Gruppen, enthalten. Die Polyurethane bilden den Hauptbestandteil der Beschichtung und ergeben Filme mit guten anwendungstechnischen Eigenschaften wie Haftung, Flexibilität und insbesondere gute Wasch- und Reinigungsbeständigkeit. Gleichzeitig dienen sie als Bindemittel für die keramischen Bestandteile. Diese sind vermutlich für die hohe Abriebfestigkeit der Beschichtung verantwortlich.

Geeignete Isocyanate zur Herstellung der in den erfindungsgemäßen Zusammensetzungen enthaltenden Polyurethane sind aromatische Diisocyanate wie 2,4- und 2,6-Toluylendiisocyanat (TDI) und Isomerengemische davon, Tetramethylxylendiisocyanat (TMXDI), Xylendiisocyanat (XDI), Diphenylmethan-4,4'-diisocyanat (MDI), sowie aliphatische und cycloaliphatische Diisocyanate, wie Dicylohexylmethan-4,4'-diisocyanat (H₁₂MDI), Tetramethylendiisocyanat, Hexamethylendiisocyanat (HMDI), Isophorondiisocyanat (IPDI), Trimethylhexamethylendiisocyanat sowie Gemische davon. Zu den bevorzugten Diisocyanaten zählen Hexamethylendiisocyanat (HMDI) und Isophorondiisocyanat. Beispiele für höherfunktionelle Isocyanate sind Triisocyanate, z. B. Triphenylmethan-4,4',4''-triisocyanat, weiterhin die Cyanurate der vorgenannten Diisocyanate, sowie die durch partielle Umsetzung von Diisocyanaten mit Wasser erhältlichen Oligomere, z.B. die Biurethe der vorgenannten Diisocyanate, ferner Oligomere, die durch gezielte Umsetzung von semiblockierten Diisocyanaten mit Polyolen, welche im Mittel mehr als 2 und vorzugsweise 3 oder mehr OH-Gruppen aufweisen, erhältlich sind. In den erfindungsgemäßen Zusammensetzungen werden Polyurethane bevorzugt, worin der Anteil an einkondensierten Triisocyanaten oder höherfunktionellen Isocyanaten weniger als 20 Gew.-% der gesamten Isocyanatmenge ausmacht.

Geeignete Diole sind Glykole mit vorzugsweise 2 bis 25 Kohlenstoffatomen. Hierzu zählen 1,2-Ethandiol, 1,2-Propandiol, 1,3-Propandiol, 1,4-Butandiol, 1,5-Pentandiol, 1,6-Hexandiol, 1,10-Decandiol, Diethylenglykol, 2,2,4-Trimethylpentandiol-1,5, 2,2-Dimethylpropandiol-1,3, 1,4-Dimethylolcyclohexan, 1,6-Dimethylolcyclohexan, 2,2-Bis(4-hydroxyphenyl)-propan (Bisphenol A), 2,2-Bis(4-hydroxyphenyl)butan (Bisphenol B) oder 1,1-Bis(4-hydroxyphenyl)-3,3,5-trimethylcyclohexan (Bisphenol C) .

Weiterhin kann die Polyol-Komponente auch höherwertige Alkohole, z. B. dreiwertige (Triole), vierwertige (Tetrole) und/oder fünfwertige Alkohole (Pentole) umfassen. Sie weisen in der Regel 3 bis 25, vorzugsweise 3 bis 18 Kohlenstoffatome auf. Hierzu zählen Glycerin, Trimethylolethan, Trimethylolpropan, Erythrit, Pentaerythrit, Sorbit und deren Alkoxylate.

Zu den Polyolen zählen weiterhin lineare oder verzweigte Oligomere und Polymere, die an ihren Termini OH-Gruppen aufweisen. Beispiele hierfür sind Polyester- und Polyetherpolyole. Bevorzugt sind lineare Oligomere und Polymere, die vorzugsweise 2 terminale OH-Gruppen aufweisen.

Unter Polyetherolen versteht man sowohl lineare als auch verzweigte Polyether, die pro Molekül im Mittel wenigstens zwei, vorzugsweise an ihren Termini angeordnete Hydroxylgruppen aufweisen. In der Regel erhält man Polyetherpolyole durch Polymerisation von Alkylenoxiden mit 2 bis 4 Kohlenstoffatomen, gegebenenfalls mit einem Starter. Als Alkylenoxid seien beispielsweise Ethylenoxid, 1,2-Propylenoxid, 1,2- und 2,3-Butylenoxid, insbesondere Ethylenoxid und Propylenoxid genannt. Als Startermolekül kommen z. B. Wasser, die zuvor genannten Glykole, Polyesterole, Polyesterole, insbesondere Ethandiol, Propylenglykol, Bisphenol A, Glycerin, Trimethylolpropan, Pentaerythrit und Sorbit in Betracht. Polyetherpolyole mit nur zwei Hydroxyendgruppen erhält man bei der Verwendung von Initiatoren wie Wasser, Ethylenglykol oder Propylenglykol. Polyetherole sind ferner durch kationische Polymerisation von cyclischen Ethern, wie Tetrahydrofuran, zugänglich. Das zahlenmittlere Molekulargewicht der Polyethersequenz beträgt in der Regel wenigstens 500 und höchstens 5000 g/mol. Besonders bevorzugte Polyetherpolyole sind Polyetherdiole, hierunter besonders bevorzugt Polyethylenoxid, Polypropylenoxid sowie statistische und Blockcopolymere von Ethylenoxid mit Propylenoxid. Der Polymerisationsgrad der Polyetherole liegt in der Regel im Bereich von ca. 10 bis 150.

Unter Polyesterpolyolen versteht man sowohl lineare als auch verzweigte Polyester mit wenigstens zwei, vorzugsweise endständigen OH-Gruppen. Ihr Molekulargewicht liegt in der Regel im Bereich von 800 bis 14000, vorzugsweise im Bereich von 1000 bis 10000 g/mol. Geeignete Polyesterole lassen sich z. B. durch Polykondenstation aliphatischer, cycloaliphatischer oder aromatischer Di-, Tri- und/oder Polycarbonsäuren, bzw. esterbildender Derivate wie Anhydride oder Chloride davon, mit den vorstehend erwähnten Di-, und/oder Polyolen und/oder Polyetherolen herstellen, wobei die Alkohol-Komponente im Überschuss eingesetzt wird. D. h. das Molverhältnis von OH-Gruppen zu Säuregruppen beträgt mehr als 1:1, z. B. 1,1:1 bis 2:1. Geeignete Carbonsäuren sind z. B. aliphatische Dicarbonsäuren mit 2 bis 20 Kohlenstoffatomen, vorzugsweise 4 bis 15 Kohlenstoffatomen, beispielsweise Malonsäure, Bernsteinsäure, Glutarsäure, Adipinsäure, Pimelinsäure, Korksäure, Sebacinsäure, Dodecandisäure, Cyclohexandicarbonsäure sowie aromatische Dicarbonsäuren wie Phthalsäure, Terephthalsäure, Isophthtalsäure, insbesondere Adipinsäure, Phthalsäure, Terephthalsäure und Isophthalsäure. Polyesterpolyole können auch durch Polykondensation von Hydroxycarbonsäuren oder Lactonen in Gegenwart geringer Mengen der vorstehend genannten Di- bzw. Polyole hergestellt werden. Geeignete Lactone sind beispielsweise solche mit 3 bis 20 Kohlenstoffatomen, wie α,α-Dimethyl-β-propiolacton, γ-Butyrolacton und ε-Caprolacton. Geeignete Hydroxycarbonsäuren sind α-Hydroxycarbonsäuren wie Glykolsäure, Milchsäure, Hydroxybuttersäure, Mandelsäure, die auch in Form ihrer Lactide vorliegen können oder β-Hydroxycarbonsäuren, γ-Hydroxycarbonsäuren, δ-Hydroxycarbonsäuren bzw. ω-Hydroxycarbonsäuren.Bevorzugt sind Polyesterdiole, die durch Kondensation von Dicarbonsäuren mit Diolen erhältlich sind.

Als Polyesterole kommen somit auch ungesättigte Polyesterole in Betracht. Ungesättigte Polyesterole erhält man z. B. durch Kondensation aliphatischer oder aromatischer Diole mit ungesättigten Dicarbonsäuren oder deren Anhydriden. Zu den ungesättigten Dicarbonsäuren bzw. Anhydriden zählen Maleinsäure, Maleinsäureanhydrid, Fumarsäure oder Itaconsäure. Eine weitere Möglichkeit ist die Teilveresterung von Polyolen, beispielsweise von Glycerin mit ungesättigten Fettsäuren wie Linolsäure oder Linolensäure.

Erfindungsgemäß bevorzugt sind Polyurethane a), die Polyetherketten der allgemeinen Formel (I), 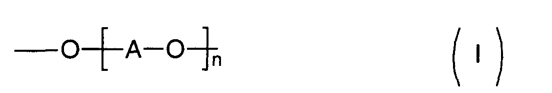 worin A für C₂-C₄-Alkylen und n für eine Zahl von 10 bis 150 steht, aufweisen. Diese sind naturgemäß dadurch erhältlich, dass man bei der Herstellung der Polyurethane die oben erwähnten Polyetherdiole einsetzt. Der Anteil an Polyetherketten beträgt vorzugsweise 5 bis 50 Gew.-% der Gesamtgewicht des Polyurethans a). Bei atmungsaktiven Beschichtungen liegt dieser Anteil vorzugsweise im Bereich von 20 bis 50 Gew.-%, insbesondere 20 bis 35 Gew.-%, bezogen auf das Gesamtgewicht des Polyurethans. Sofern nicht atmungsaktive Beschichtungen erwünscht sind, so beläuft sich der Anteil an Polyetherstrukturen im Polyurethan vorzugsweise auf höchstens 20 Gew.-%.

Die Polyurethane a) können weiterhin polare funktionelle Gruppen aufweisen. Diese Gruppen begünstigen die Dispergierung der Polyurethane in Wasser. Beispiele für polare funktionelle Gruppen sind ionogene und/oder ionische Gruppen, vorzugsweise Carbonsäuregruppen, Sulfonsäuregruppen, Phosphonsäuregruppen, Phosphorsäuregruppen, bzw. deren Salzformen, wie die Alkalimetall- und Ammoniumsalzen, weiterhin Aminogruppen, quartäre Aminogruppen, sowie Polyethergruppen. Die Einführung dieser funktionellen Gruppen in das Polyurethan erfolgt in der Regel, indem man bei der Herstellung der Polyurethane Verbindungen verwendet, die mit anionischen bzw. anionogenen oder kationischen bzw. kationogenen Gruppen substituiert sind, die wenigstens zwei gegenüber Isocyanat reaktive Gruppen aufweisen. Der Anteil derartiger Bausteine, bezogen auf die Gesamtmenge der das Polyurethan bildenden Komponenten, liegt in der Regel im Bereich von 0,1 bis 20 Gew.-%, vorzugsweise 1 bis 10 Gew.-%.

Geeignete Verbindungen mit polaren funktionellen Gruppen sind beispielsweise anionisch modifizierte Di- oder Polyole wie die Reaktionsprodukte von Dicarbonsäuren, die zusätzlich wenigstens eine Phosphonsäuregruppe, Sulfonsäuregruppe oder Sulfonatgruppe aufweisen, mit den vorstehend erwähnten Diolen. Die Dicarbonsäurekomponente umfasst z. B.

Sulfobernsteinsäure, 4-Sulfophthalsäure, 5-Sulfoisophthalsäure, Sulfoterephthalsäure, 4-Sulphonaphthalin-2,7-dicarbonsäure, 5-(4-Sulfophenoxy)-terephthalsäure sowie die entsprechenden Salze. Zu den anionisch modifizierten Diolen zählen auch die Diesterdiole von Tri- oder Tetracarbonsäuren mit den zuvor genannten Diolen. Als Tri- oder Tetracarbonsäuren kommen beispielsweise 2-Phosphonobutan-1,2-4-tricarbonsäure, Citronensäure, 1,2,3-Propantricarbonsäure, 1,3,5-Benzoltricarbonsäure (Trimesinsäure), 1,2,4-Benzoltricarbonsäure (Trimellithsäure), 1,2,4,5-Benzoltetracarbonsäure (Pyromellithsäure) in Betracht. Zu den anionisch funktionalisierten Diolen zählen weiterhin lineare oder verzweigte Diole, die aliphatisch, cycloaliphatisch oder aromatisch sein können und die eine anionische funktionelle Gruppe tragen. Beispiele hierfür sind Dimethylolpropionsäure (Bis-2,2-(hydroxymethyl)propionsäure), 2-Sulfo-1,4-butandiol, 2,5-Dimethyl-3-sulfo-2,5-hexandiol sowie deren Salze, insbesondere deren Natrium- und Kaliumsalze. Geeignete anionisch modifizierte Verbindungen sind weiterhin entsprechend substituierte Aminoalkohole und Diamine, z. B. Ethylendiamin-N-essigsäure, Ethylendiamin-N-propionsäure, N-(Sulfonatoethyl)ethylendiamin, deren Salze, insbesondere deren Natrium- und Kaliumsalze.

Geeignete Verbindungen mit ionogener oder ionischer Gruppe sind außerdem sekundäre oder tertiäre Amine, welche am Stickstoffatom mit wenigstens zwei Hydroxyalkylgruppen substituiert sind. Als weiteren Substituenten weisen dies Verbindungen z. B. einen C₁-C₆-Alkyl-, Phenyl-, Phenyl-C₁-C₄-alkyl-Rest oder eine weitere Hydroxyalkylgruppe auf. Die Hydroxyalkylgruppen können gleich oder verschieden sein. Hydroxyalkyl steht in diesem Zusammenhang für eine Alkylgruppe mit vorzugsweise 2 bis 8 Kohlenstoffatomen, die eine Hydroxygruppe aufweist, wie 2-Hydroxyethyl, 2- oder 3-Hydroxypropyl, 2-, 3- oder 4-Hydroxybutyl und dergleichen. Geladene kationische Verbindungen lassen sich aus den vorgenannten sekundären oder tertiären Aminen durch Quaternierisierung der Aminstickstoffatome herstellen, beispielsweise durch Umsetzung mit Alkylierungsmitteln wie C₁-C₄-Alkylhalogeniden oder -sulfaten. Beispiele solcher Alkylierungsmittel sind Ethylchlorid, Ethylbromid, Methylchlorid, Methylbromid, Dimethylsulfat und Diethylsulfat. Geeignet sind auch Hydroxy-C₂-C₈-alkylpiperazine, Bis(hydroxy-C₂-C₈-alkyl)piperazine, N-(Amino-C₂-C₈-alkyl)piperazine und N,N'-Bis(amino-C₂-C₈-alkyl)piperazine und deren Quaternisierungsprodukte.

Das Polyurethan kann außerdem noch reaktive funktionelle Gruppen aufweisen, die eine nachträgliche Vernetzung des Polyurethans erlauben. In der Regel beträgt der Anteil der reaktiven funktionellen Gruppen 0,1 bis 2 mol/kg Polymer. Zu den geeigneten funktionellen Gruppen zählen insbesondere ethylenisch ungesättigte Doppelbindungen, Hydroxy-, Mercapto-, Amino-, Aldehyd-, Carbonyl-, β-Ketocarbonyl- und Oxirangruppen sowie reversibel blockierte Isocyanatgruppen.

Ethylenisch ungesättigte Doppelbindungen können in bekannter Weise, z. B. thermisch oder mittels UV-Strahlung in Gegenwart geeigneter Initiatoren nachvernetzt werden. Die übrigen reaktiven funktionellen Gruppen können z.B. thermisch, gegebenenfalls unter Zusatz externer Vernetzer nachvernetzt werden. Externe Vernetzer sind Verbindungen, die wenigstens zwei funktionelle Gruppen aufweisen, die hinsichtlich ihrer Reaktivität gegenüber den funktionellen Gruppen im Polyurethan komplementär sind. Zu den geeigneten Vernetzern für Carboxylgruppen zählen beispielsweise die vorstehend genannten Di- oder Polyole oder primäre oder sekundäre Diamine, vorzugsweise primäre Amine, wie Dialkylamine, Dihydrazide von Dicarbonylverbindungen, Jeffamine. Geeignete Vernetzer für Carbonyl- und Ketocarbonylgruppen sind beispielsweise vorstehende Diamine und Dihydrazide von Dicarbonsäuren. Sofern das Polyurethan verschiedene zueinander komplementäre reaktive Gruppen aufweist, ist ein Vernetzerzusatz nicht erforderlich. Sofern ein Vernetzer gewünscht ist, wird man ihn in der Regel in einer Menge einsetzen, dass das Molverhältnis von reaktiven funktionellen Gruppen im Polyurethan zu den reaktiven funktionellen Gruppen im Vernetzer im Bereich von 5:1 bis 1:5 liegt.

Die Einführung der reaktiven Gruppen in das Polyurthan kann beispielsweise durch Umsetzung von Polyurethanen, welche freie oder reversibel blockierte Isocyanatgruppen aufweisen, mit Verbindungen, die sowohl eine gegenüber Isocyanatgruppen reaktive funktionelle Gruppe als auch eine weitere der oben genannten reaktiven funktionellen Gruppen aufweisen, erfolgen. Geeignete Verbindungen mit wenigstens einer gegenüber Isocyanantgrupen reaktiven Gruppe sind Hydroxyalkylester ethylenisch ungesättigter Carbonsäuren, z. B. die Hydroxyalkylester der Acrylsäure und der Methacrylsäure, weiterhin Glycidylalkohol. Polyurethane mit reaktiven funktionellen Gruppen können außerdem hergestellt werden, indem man bei der Herstellung einen gewisssen Anteil an Diisocyanaten und/oder an Diolen einsetzt, welche neben den Isocyant- bzw. den OH-Gruppen eine reaktive funktionelle Gruppe, gegebenenfalls in einer reversibel blockierten Form, aufweisen.

Wässrige Polyurethandispersionen, die Polyurethane mit reaktiven funktionellen Gruppen und gegebenenfalls einem Vernetzer enthalten und die beim Erwärmen vernetzen, werden im Folgenden als selbstvernetzende Polyurethandispersionen bezeichnet und werden für die erfindungsgemäßen Zusammensetzungen bevorzugt.

In einer bevorzugten Ausführungsform sind die erfindungsgemäß zur Anwendung kommenden Polyurethane aus den im Folgenden angegebenen Komponenten aufgebaut:
i) 20 bis 60 Gew.-Teile wenigstens eines Diisocyanats,
ii) 5 bis 50 Gew.-Teile wenigstens eines Polyetherdiols,
iii) 0 bis 10 Gew.-Teile, z. B. 1 bis 10 Gew.-Teile, eines oder mehrerer aliphatischer und/oder cycloaliphatischer Diole sowie gegebenenfalls
iv) 0 bis 50 Gew.-Teile, z. B. 5 bis 50 Gew.-Teile, eines oder mehrerer Polyesterdiole,
v) 0 bis 5 Gew.-Teile einer oder mehrerer Verbindungen mit mehr als zwei Isocyanatgruppen,
vi) 0 bis 10 Gew.-Teile, z. B. 1 bis 10 Gew.-Teile, einer oder mehrerer Verbindungen mit zwei Isocyanatgruppen oder mit zwei Hydroxylgruppen und wenigstens einer weiteren reaktiven funktionellen Gruppe,
wobei die Summe der Gewichtsteile aller Komponenten 100 Gew.-Teile beträgt.

Weiterhin ist es vorteilhaft, wenn das Polyurethan in der wässrigen Dispersion eine Glasübergangstemperatur im Bereich von -20 °C bis +100 °C, insbesondere -20 °C bis +50 °C aufweist.

Die als Komponente a) eingesetzten Polyurethane sind für die Beschichtung von Textilien bekannt (siehe z. B. J. Hemmrich, Int. Text. Bull. 39, 1993, Nr.2, S. 53-56; "Wässrige Polyurethan-Beschichtungssysteme" Chemiefasern/Textilind. 39 91 (1989) T149, T150; W. Schröer, Textilveredelung 22, 1987, S. 459-467) und im Handel erhältlich, z. B. unter den Handelsbezeichnungen Alberdingk® der Fa. Alberdingk, Impranil® der Fa. BAYER AG, Permutex® der Fa. Stahl Waalwijk/Niederlande, oder können nach bekannten Verfahren hergestellt werden, wie sie beispielsweise in "Herstellverfahren für Polyurethane" in Houben-Weyl, "Methoden der organischen Chemie", Band E 20/Makromolekulare Stoffe, S. 1587, D. Dietrich et al., Angew. Chem. 82 (1970), S. 53 ff., Angew. Makrom. Chem. 76, 1972, 85 ff. und Angew. Makrom. Chem. 98, 1981, 133-165, Progress in Organic Coatings, 9, 1981, S. 281-240, bzw. Römpp Chemielexikon, 9. Auflage, Band 5, S. 3575 beschrieben werden.

In der Regel wird man die Umsetzung der Isocyanat-Komponente und der Di- oder Polyol-Komponente in einem Lösungsmittel, gegebenenfalls in Gegenwart eines die Urethanbildung fördernden Katalysators, z. B. Organozinnverbindungen wie Dibutylzinnlaurat, durchführen. Geeignete Lösungsmittel sind Ketone, beispielsweise Aceton, Methylethylketon, Ether, beispielsweise Tetrahydrofuran. Anschließend destilliert man das Lösungsmittel ab. Durch Zugabe von Wasser und gegebenenfalls von oberflächenaktiven Verbindungen wie Schutzkolloide oder Emulgatoren und Entfernen des Wassers erhält man dann die wässrige Polyurethandispersion. Man kann auch die oben genannten, blockierten Isocyanate in wässriger Dispersion mit den Di- oder Polyolen, vorzugsweise in Gegenwart eines die Deblockierung fördernden Katalysators umsetzen, wobei man direkt eine wässrige Polyurethandispersion erhält.

Die Menge an Dispergierwasser wird in der Regel so bemessen, das die resultierende wässrige Polyurethandispersion einen Feststoffgehalt von 10 bis 70 Gew.-%, vorzugsweise etwa 20 bis 60 Gew.-%, ganz besonders bevorzugt etwa 45 bis 55 Gew.-% aufweist. Die Partikelgröße der Polymerteilchen liegt in der Regel im Bereich von etwa 10 bis etwa 1500 nm, insbesondere im Bereich von 20 bis 1000 nm.

Zur Herstellung der Poyurethane können die Isocyanate auch als verkappte Isocyanate eingesetzt werden. Unter verkappten Isocyanaten versteht man Isocyanat-Derivate, worin die Isocyanatgruppen mit leicht abspaltbaren Gruppen, beispielsweise mit Alkanolen, Phenolen, Malonsäure, Sulfit oder Oximen, z. B. Alkyloximen wie Butanonoxim reversibel blockiert sind. Derartige Isocyanat-Derivate sind gegenüber Wasser nicht reaktiv und können daher als wässrige Dispersion eingesetzt werden. Durch Zufuhr von Wärme wird die reaktive Isocyanatgruppe freigesetzt. Bei einer anderen Variante erfolgt die Blockierung durch intermolekulare Dimerisierung zweier Isocyanatgruppen. Die Deblockierung erfolgt wiederum durch Wärme.

Zur Optimierung der Anwendungseigenschaften kann es günstig sein, bis zu 50 Gew.-Teile des Polyurethans durch ein davon verschiedenes Polymer (Komponente b)) zu ersetzen. Dementsprechend beträgt der Anteil an diesen Polymeren 0 bis 100 Gew.-Teile, insbesondere 0 bis 60 Gew.-Teile bezogen auf 100 Gew.-Teile Polyurethan a). Vorzugsweise vermischt man hierzu die wässrige Polyurethandispersion a) mit einer wässrigen Polymerdispersion der Komponente b).

Bei den Polymeren der Komponente b) handelt es sich in der Regel um filmbildende Polymere, d.h. Polymere, die beim Trocknen der Beschichtung zusammen mit dem Polyurethan oder allein einen geschlossenen Polymerfilm auf dem textilen Träger ausbilden. In der Regel weisen diese Polymere eine Glasübergangstemperatur im Bereich von -30 °C bis 150 °C, vorzugsweise -20 °C bis 100 °C auf.

Wässrige Dispersionen derartiger Polymere sind dem Fachmann bekannt, z. B. aus D. Distler "Wässrige Polymerdispersionen", Wiley-VCH, Weinheim, 1999 (Bindemittel speziell für textile Beschichtungen siehe Distler, 8. Kapitel, S. 171 ff.)

Beispiele für geeignete Bindemittel sind Polymere, insbesondere vernetzbare Polymere, auf Basis ethylenisch ungesättigter Monomere wie:
- Acrylatharze (Reinacrylate);
- Styrolacrylate;
- Styrol/Butadien-Copolymerisate;
- Polyvinylester, insbesondere Polyvinylacetate;
- Vinylester-Olefin-Copolymere; sowie
- Vinylester-Acrylat-Copolymere.

Unter Acrylatharzen versteht der Fachmann Homo- oder Copolymere von Acrylsäure- und/oder Methacrylsäureestern, gegebenenfalls mit weiteren ethylenisch ungesättigten Comonomeren sowie gegebenenfalls ethylenisch ungesättigten Hilfsmonomeren, z. B. ethylenisch ungesättigten Mono- und Dicarbonsäuren wie (Meth)acrylsäure, Itakonsäure, deren Amiden wie (Meth)acrylamid und N-Methylol(meth)acrylamid, ethylenisch ungesättigten Sulfonsäuren wie Vinylsulfonsäure, Styrolsulfonsäure, (Meth)acrylamido-2-methylpropansulfonsäure bzw. deren Ammonium-, Natrium- oder Kaliumsalze, kationische bzw. kationogene Monomeren wie Amino-C₂-C₄-alkyl(meth)acrylamid, N,N-Di-C₁-C₄-alkylamino-C₂-C₄-alkyl(meth)acrylamide, N,N-Di-C₁-C₄-alkylamino-C₂-C₄-alkyl(meth)acrylate und deren Quaternisierungsprodukte und/oder Hydroxyalkyl(meth)acrylate. Beispiele für (Meth)acrylester sind die C₁-C₁₀-Alkylester, insbesondere die Methyl-, Ethyl-, Propyl-, n-Butyl-, tert.-Butyl- und die 2-Ethylhexylester der Acryl- und Methacrylsäure. Unter Styrolacrylaten versteht der Fachmann dementsprechend Copolymere aus Styrol mit wenigstens einem Ester der Acrylsäure und/oder der Methacrylsäure und gegebenenfalls weiteren Monomeren, z. B. den vorgenannten Hilfsmonomeren. Unter dem Begriff Styrol-Butadien Copolymere versteht der Fachmann Copolymere des Butadiens mit Styrol, die gegebenenfalls die vorgenannten Hilfsmonomere und/oder gegebenenfalls Acrylnitril und/oder Methacrylnitril einpolymerisiert enthalten.

Unter Polyvinylestern versteht der Fachmann die Homo- und Copolymere von Vinylestern aliphatischer C₁-C₂₀-Monocarbonsäuren, insbesondere von Vinylacetat, gegebenenfalls mit weiteren Comonomeren, z. B. Vinylpropionat, Vinylbutyrat, Vinylvalerat, Vinylhexanoat und/oder Acrylnitril, und gegebenenfalls den oben genannten Hilfsmonomeren. Polyvinylester, die C₂-C₆-Olefine wie Ethylen einpolymerisiert enthalten, werden auch als Vinylester-Olefin-Copolymere bezeichnet. Polyvinylester, die Ester monoethylenisch ungesättiger Mono- und/oder Dicarbonsäuren einpolymerisiert enthalten, werden als Vinylester-Acrylate bezeichnet.

Es hat sich bewährt, wenn die Polymere der Komponente b) ebenfalls die oben genannten reaktiven Gruppen und/oder R-O-CH₂NH-Gruppen mit R = H oder C₁-C₄-Alkyl aufweisen und somit, gegebenenfalls durch Zusatz externer Vernetzer vom oben genannten Typ, nachvernetzbar sind.

Derartige Polymere sind z. B. in Form wässriger Polymerlatices, im Handel erhältlich, z. B. unter den Bezeichnungen ACRONAL, STYROFAN, BUTOFAN (BASF-AG), MOWILITH, MOWIPLUS, APPRETAN (Clariant), VINNAPAS, VINNOL (WACKER).

Ferner können auch Polysiloxane als Komponente b) einen Teil der Polyurethane ersetzen. Polysiloxane werden auch als Siliconkautschuke bezeichnet. Sie sind im Handel erhältlich. Sie entstehen unter Abspaltung von HCl bei der Hydrolyse von Dichlorsilanen R₂SiCl₂, wobei vorzugsweise Methyl-, Vinyl- und Phenylgruppen für R stehen. Ein Überschuss an Wasser begünstigt die Bildung von cyclischen Siliconkautschuken. Eine alternative Route ist die Hydrolyse von Alkoxysilanen unter Abspaltung von Alkohol.

Erfindungsgemäß enthalten die wässrigen Zusammensetzungen ein keramisches Pulver c). Dieses ist in der Regel ausgewählt unter Keramikoxiden, keramischen Werkstoffen wie kovalenten Carbiden, metallischen Carbiden, Nitriden und Gemischen davon. Die keramischen Pulver sind bekannt und im Handel erhältlich. Beispiel für Keramikoxide sind Aluminiumoxid, Siliciumoxid, Berylliumoxid, Magnesiumoxid, Zirkondioxid, insbesondere Siliciumoxid, Zirkondioxid und Aluminiumoxid. Zu den geeigneten metallischen Carbiden zählen Wolframcarbid, Titancarbid, Vanadiumcarbid, Molybdäncarbid, Tantalcarbid, und zu den kovalenten Carbiden gehören Siliciumcarbid in kubischer und hexagonaler Form sowie Borcarbid. Ganz besonders bevorzugt enthält die wässrige Beschichtungszusammensetzung Siliciumcarbid, das für eine hohe Abriebfestigkeit sorgt. Beispiele für Nitride sind Bornitrid, Siliciumnitrid (α-, β-Phase), Aluminiumnitrid, Titannitrid, Vanadinnitrid sowie Tantalnitrid. Keramische Werkstoffe zeichnen sich durch ihre Festigkeit aus. Ihre Beimengung zum Polymer erhöht die Abriebfestigkeit der Beschichtung.

Üblicherweise enthält die Zusammensetzung das keramische Pulver in einer Menge von 5 bis 150 Gew.-Teilen, vorzugsweise 5 bis 50 Gew.-Teilen, bezogen auf 100 Gew.-Teile Polymerbestandteile der Komponenten a) plus b). Dies entspricht einem Gehalt an keramischen Partikeln von 5 bis 50 Gew.-Teilen, vorzugsweise 5 bis 25 Gew.-Teilen bezogen auf 100 Gew.-Teile der erfindungsgemäßen Zusammensetzung.

Die mittlere Teilchengröße (Gewichtsmittel, bestimmt über Sieblinie) der Keramikpartikel liegt erfindungsgemäß im Bereich von 0,1 bis 20 µm und insbesondere 0,1 bis 10 um. Sie weisen in der Regel eine BET-Oberfläche (nach DIN 66131) im Bereich von 1 bis 50 m²/g, insbesondere von 1 bis 30 m²/g und ganz besonders bevorzugt von 5 bis 20 m²/g auf.

Zusätzlich zu den Keramikpartikeln kann die Dispersion auch Hohlkugeln d) enthalten. Diese können aus Glas, Wasserglas, Polyvinylidenfluorid oder Polystyrol bestehen, wobei solche aus Glas bevorzugt sind. Sie verbessern die Isolierwirkung der Beschichtung, insbesondere die Isolierwirkung gegenüber Wärme. Üblicherweise enthält die erfindungsgemäße Zusammensetzung die Hohlkugeln in einer Menge von 0 bis 80 Gew.-Teilen, z. B. 1 bis 80 Gew.-Teilen, vorzugsweise in einer Menge bis zu 40 Gew.-Teilen, z. B. 2 bis 40 Gew.-Teilen, ganz besonders bevorzugt in einer Menge von 5 bis 40 Gew.-Teilen, bezogen auf 100 Gew.-Teile Polymerbestandteile der Komponenten a) plus b). Dies entspricht einem Gehalt an Hohlkugeln von 0 bis 40 Gew.-%, z. B. 1 bis 40 Gew.-%, vorzugsweise 0 bis 20 Gew.-%, z. B. 1 bis 20 Gew.-%, bezogen auf das Gesamtgewicht der erfindungsgemäßen Zusammensetzung. Ihr Außendurchmesser beträgt in der Regel 5 bis 200 µm, insbesondere 5 bis 150 µm und besonders bevorzugt 9 bis 90 um. Die Wandstärke liegt z. B. im Bereich von 0,5 bis 20 µm, vorzugsweise 0,5 bis 5 µm, insbesondere 1 bis 2 µm. Geeignete Hohlkugeln werden z. B. unter dem Namen Sphericell 110 P 8 bzw. Q-Cell von der Firma Potters Europe, Kirchheim-Bolanden, vertrieben.

Gegebenenfalls enthält die Beschichtungsmasse Farbmittel e). Bevorzugte Farbmittel sind anorganische und organische Pigmente. Diese sind im Handel als Pulver sowie als feste oder flüssige Pigmentpräparation erhältlich. Gegebenenfalls verwendet man als Farbmittel auch Pigmentgemische. Vorzugsweise haben die Pigmentteilchen eine Teilchengröße < 5 µm, insbesondere ≤ 1 µm und speziell im Bereich von 0,01 µm bis 0,4 um.

Üblicherweise enthält die erfindungsgemäße Zusammensetzung die Komponenten a) bis e) in Form einer wässrigen Dispersion. Das Dispergiermedium ist in der Regel Wasser oder eine Mischung aus Wasser und bis zu 50 Gew.-%, bezogen auf das Dispergiermedium, eines mit Wasser mischbaren, organischen Lösungsmittels. Geeignete, wassermischbare organische Lösungsmittel sind beispielsweise Ether wie Tetrahydrofuran, Dioxan, 1,2-Propandiol-1-n-propylether, 1,2-Butandiol-1-methylether, Ethylenglykolmonomethylether, Diethylenglykolmomomethylether, Diethylenglykoldimthylether, Mono- oder Polyalkohole wie Methanol, Ethanol, n-Propanol, Isopropanol, Glykol, Glycerin, Propylenglykol, Polyethylenglykol, Ketone wie Aceton oder Methylethylketon. Insbesondere verwendet man Isopropanol als mit Wasser mischbares Lösungsmittel.

Die für wässrige, atmungsaktive Beschichtungen verwendeten Dispersionen weisen einen pH-Wert von 7 bis 10, vorzugsweise 8 bis 9 auf, im Falle der nicht-atmungsaktiven Beschichtungen liegt er im Bereich von 7 bis 9, insbesondere bei 7 bis 8.

Ferner enthält die erfindungsgemässe Beschichtungszusammensetzung in der Regel die für derartige Zusammensetzungen üblichen Hilfsmittel, die sich in bekannter Weise nach dem Anwendungszweck richten. Hierzu zählen Dispergierhilfsmittel, oberflächenaktive Substanzen, Verdicker, Entschäumer, Mittel zur Einstellung des pH-Wertes, Antioxidantien und Konservierungsmittel.

Mittel zur Einstellung des pH-Wertes sind beispielsweise Ammoniak, Alkalimetallbasen wie Kalium- und Natriumhydroxid, Natriumhydrogencarbonat, Natriumcarbonat, Kaliumcarbonat, Kaliumhydrogencarbonat, Erdalkalimetallbasen wie Calciumhydroxid, Calciumoxid, Magnesiumhydroxid oder Magnesiumcarbonat, Alkylamine, wie Ethylamin, Diethylamin, Trimethylamin, Triethylamin, Triisopropylamin und Mono-, Di- und Trialkanolamine wie Ethanolamin, Diethanolamin, Aminomethylpropanol, Aminomethylpropandiol und Trishydroxymethylaminomethan sowie Gemische davon. Insbesondere verwendet man Ammoniak.

Als oberflächenaktive Substanzen sind die für die Herstellung von Dispersionen üblichen Emulgatoren und Schutzkolloide geeignet. Die grenzflächenaktiven Substanzen können sowohl anionisch, als auch kationisch, nichtionisch oder amphoter sein.

Zu den amphoteren oberflächenaktiven Substanzen zählen Sulfobetaine, Carboxybetaine, Alkyldimethylaminoxide, z. B. Tetradecyldimethylaminoxid.

Geeignete nicht-ionische Emulgatoren sind alkoxylierte tierische/pflanzliche Fette und Öle, z. B. Maisölethoxylate, Rizinusölethoxylate, Talgfettethoxylate; Glycerinester, z. B. Glycerinmonostearat; Fettalkoholalkoxylate und Oxoalkoholalkoxylate; Alkylphenolalkoxylate, z. B. Isononylphenolethoxylate; und Zuckertenside, z. B. Sorbitanfettsäureester (Sorbitanmonooleat, Sorbitantristearat), Polyoxyethylensorbitanfettsäureester. Insbesondere verwendet man Fettalkoholethoxylate.

Geeignete anionische Emulgatoren sind beispielsweise Seifen, Alkansulfonate, Olefinsulfonate, Alkylarylsulfonate, Alkylnaphthalinsulfonate, Sulfosuccinate, Alkylsulfate und Alkylethersulfate, Alkylmethylestersulfonate, Acylglutamate, Sarkosinate und Taurate sowie Gemische davon, vorzugsweise in Form der Natriumsalze. Beispiele hierfür sind Natriumlaurylsulfat, Natriumlaurylethersulfat, Oleylsulfonat, Nonylbenzolsulfonat, Natriumdodecylbenzosulfonat, Butylnapthalinsulfonat und Naphthalinsulfonat.

Beispiele für Schutzkolloide sind Gelatine, Fischgelatine, Celluloseether, wie Carboxymethylcellulose, Methylcellulose, Ethylcellulose, Hydroxyethylcellulose, Ethylhydroxyethylcellulose, Hydroxypropylcellulose, Gummi arabicum, Polyvinylalkohole und Polyvinylpyrolidon sowie Gemische davon, insbesondere Celluloseether, Polyvinylalkohole, Polyacrylsäure und Acrylsäure-reiche Copolymere sowie Polyvinylpyrolidon.

Geeignete oberflächenaktive Substanzen sind weiterhin Polymertenside, wie Di-, Tri- und Multi-Blockpolymere vom Typ (AB)x-, ABA und BAB, z. B. Polyethylenoxid-blockpolypropylenoxid, Polystyrol-blockpolyethylenoxid, und AB-Kammpolymere, z. B. Polymethacryl-comb-polyethylenoxid und Copolymerisate von Acrylsäure und Maleinsäureanhydrid, insbesondere Copolymerisate von Acrylsäure und Maleinsäureanhydrid, vorzugsweise in neutralisierter Form, z. B. in Form der Natrium- oder der Ammoniumsalze.

Die Menge an oberflächenaktiver Substanz beträgt im Allgemeinen 0 bis 20 Gew.-Teile, vorzugsweise 0,5 bis 10 Gew.-Teile bezogen auf 100 Gew.-Teile der Polymerbestandteile in den Komponenten a) plus b).

Geeignete Entschäumer sind beispielsweise höhere Alkohole, nichtionogene Acetylenverbindungen, aliphatische Kohlenwasserstoffe mit nichtionogenen Bestandteilen sowie Oligosiloxane. In der Regel sollte die Menge an Entschäumer etwa 10 % des Tensidanteils ausmachen.

Gegebenenfalls kann die Beschichtungsmasse zur Verbesserung der rheologischen Eigenschaften Verdickungsmittel enthalten. Zur Vermeidung eines Tropfens der Dispersion während des Auftrags sollte die Beschichtungsmasse in der Regel nicht zu dünnflüssig sein. Schutzkolloide wirken häufig auch als Verdickungsmittel. Geeignete Verdicker sind Gummi arabicum, Gelatine, Caseine, Stärke, Alginate, Polyether, Cellulose-Derivate wie Methyl-, Carboxymethylcelluose oder Hydroxyethyl- u. Propylcellulose, Polyacrylsäure-Salze, wie das Natriumsalz oder das Ammoniumsalz der Polyacrylsäure oder anorganische Verdickungsmittel wie Kieselsäure, sowie Gemische davon. Die Menge an Verdickungsmittel hängt naturgemäß von der gewünschten Rheologie ab und kann daher über einen weiten Bereich schwanken. Üblicherweise liegt sie bei 0 bis 10 Gew.-Teile, bezogen auf 100 Gew.-Teile der Zusammensetzung.

Die Viskosität der Beschichtungsmasse liegt üblicherweise im Bereich von 3000 bis 30000 mPas, insbesondere im Bereich von 3500 bis 20000 mPas. Der Feststoffgehalt der erfindungsgemäßen Zusammensetzung liegt üblicherweise im Bereich von 15 bis 70 Gew.-%, insbesondere 45 bis 70 Gew.-%.

Für die Herstellung der Beschichtungsmasse setzt man üblicherweise eine im Handel erhältliche Polyurethandispersion, Gemische aus Polyurethandispersionen und den vorstehend beschriebenen Polymerdispersionen oder ausschließlich die vorstehend beschriebenen Polymerdispersionen ein. Man vermischt die wässrige, auf den gewünschten Feststoffgehalt eingestellte Polymerdispersion, gegebenenfalls zusammen mit dem Farbmittel, mit einem Agens zur Einstellung des pH-Wertes, mit Keramikpartikeln, einem oder mehreren Verdickungsmitteln, gegebenenfalls zusammen mit den Hohlkugeln. Zusätzlich fügt man gegebenenfalls noch Tenside, Entschäumer, Schutzkolloide usw. zu. Das Vermischen erfolgt beispielsweise mit einem Dissolver.

Gegenstand der Erfindung ist auch ein textiles Flächengebilde, das auf einem textilen Träger wenigstens eine Beschichtung aufweist, die
a) wenigstens ein Polyurethan, vorzugsweise ein nachvernetzbares Polyurethan
b) gegebenenfalls ein oder mehrere davon verschiedene, vorzugsweise nachvernetzbare Polymere in einer Menge von 0 bis 100 Gew.-Teilen bezogen auf 100 Gew.-Teile des Polyurethans a),
c) wenigstens ein keramisches Pulver mit einer Teilchengröße von 0,1 bis 10 µm in einer Menge von 5 bis 150 Gew.-Teilen, vorzugsweise 5 bis 50 Gew.-Teilen, bezogen auf 100 Gew.-Teilen Polymerbestandteile der Komponenten a) plus b),
d) gegebenenfalls Hohlkugeln mit einem Außendurchmesser im Bereich von 5 bis 200 µm in einer Menge von 0 bis 80 Gew.-Teilen, vorzugsweise 0 bis 40 Gew.-Teilen, bezogen auf 100 Gew.-Teile Polymerbestandteile der Komponenten a) plus b), z. B. 1 bis 80 Gew.-Teile, insbesondere 2 bis 40 Gew.-Teilen, bezogen auf 100 Gew.-Teile Polymerbestandteile der Komponenten a) plus b),
e) gegebenenfalls Farbmittel und
f) gegebenenfalls übliche Hilfsmittel enthält.

Unter einem textilen Flächengebilde versteht man sowohl Gewebe oder Gewirke, die aus Garnen hergestellt wurden sowie nichtgewebte Vliesstoffe aus Fasern (nonwovens). Als Fasermaterialien kommen grundsätzlich alle für die Herstellung von Textilien üblicherweise eingesetzten Fasern in Betracht. Hierzu zählen Baumwolle, Wolle, Hanffaser, Sisalfasern, Flachs, Ramie, Polyacrylnitril, Polyesterfasern, Polyamidfasern, Viskose, Seide, Acetatfasern, Triacetatfasern, Aramidfasern und dergleichen. Die erfindungsgemäßen Beschichtungsmittel eignen sich vorzugsweise für textile Flächengebilde auf der Basis von Fasern wie Polyamid, Baumwolle, Polyester und Wolle. Besonders bevorzugte Polyamide sind Aramide, wie beispielsweise Nomex®, Kevlar® und Cordura®.

Die erfindungsgemäßen Beschichtungszusammensetzungen werden nach den hierfür üblichen Methoden auf den zu beschichtenden textilen Träger aufgebracht. Vorzugsweise bringt man die erfindungsgemäßen Beschichtungszusammensetzungen durch Rakeln auf, beispielsweise durch Luft-, Gummituch- und Walzen-Rakeln. Bevorzugt ist auch das Aufbringen mittels einer Rotationssiebdruckschablone. Außerdem kann man eine verdünnte Beschichtungszusammensetzung, z. B. mit einem Feststoffgehalt von 5 bis 25 Gew.-% mittels Sprühauftrag auf den textilen Träger aufbringen. Dieses Verfahren ermöglicht einen sehr gleichmäßigen Auftrag des Beschichtungsmittels. In der Regel wird man das Beschichtungsmittel in einer Menge auftragen, dass eine trockene Beschichtung in einer Auflage von 2 bis 200 g/m², insbesondere 5 bis 50 g/m² Gewebe resultiert. Nach dem Aufbringen des Beschichtungsmittels wird dieses getrocknet. Das Trocknen erfolgt in der Regel bei Temperaturen oberhalb 100 °C, vorzugsweise im Bereich von etwa 130 bis 200 °C. Der Trockenvorgang nimmt in der Regel 40 Sekunden bis 4 Minuten, z. B. 60 bis 100 Sekunden bei 150 bis 170 °C oder 50 bis 120 Sekunden bei 140 bis 180 °C in Anspruch. Alternativ kann er auch mit steigender Temperatur durchgeführt werden, beispielsweise über einen Zeitraum von 1 bis 4 min, z. B. 2 min, mit einem Temperaturgradienten von 100 °C bis 180 °C, z. B. in den Temperaturstufen von 100 °C, 120 °C, 140°C , 160°C , 160 °C und 160 °C.

Es hat sich bewährt, die erfindungsgemäße Beschichtungszusammensetzung vor ihrem Aufbringen auf den textilen Träger zu filtrieren, beispielsweise durch ein 40 mesh-Sieb zu passieren, um Agglomerate aus der Beschichtung zu entfernen. Ferner hat es sich bewährt, die textilen Flächengebilde, auf die atmungsaktive Beschichtungen aufgebracht werden sollen, zunächst mit einem handelsüblichen Hydrophobiermittel vorzuimprägnieren. Als Imprägniermittel eignen sich beispielsweise Essigsäure/Fluorcarbonharzemulsionen. Bei den Fluorcarbonharzen handelt es sich insbesondere um Polymere, deren Fluoranteil im Bereich von 1 bis 10 Gew.-% liegt, beispielsweise Dipolit® 480, das von der Firma Rotta, Mannheim, vertrieben wird.

Beschichtete, textile Flächengebilde, unabhängig davon, ob sie mit einer atmungsaktiven oder nicht-atmungsaktiven Beschichtung versehen sind, werden häufig nachimprägniert. Hierfür eignen sich Fluorcarbonharze wie Dipolit® 480 und verkappte Vernetzer auf Isocyanatbasis wie Rotal® 444.

Die mit den erfindungsgemäßen Beschichtungsmitteln versehenen textilen Flächengebilde sind abriebfest und weisen überraschenderweise einen besseren UV-Schutz auf als Beschichtungen ohne keramischen Bestandteil c). Außerdem sind sie waschpermanent bis 90 °C, beispielsweise bei 40 °C bis 90 °C und gegenüber Chemikalien unempfindlich. Häufig weisen sie auch eine gute Isolatorwirkung gegenüber Wärme auf, insbesondere wenn sie Hohlkugeln in der oben angegebenen Menge enthalten.

Die erfindungsgemäß beschichteten textilen Flächengebilde können daher in einer Vielzahl von Anwendungen eingesetzt werden, beispielsweise als Bekleidung z. B. für Sportswearartikel wie Jacken, Mäntel, Hosen, Motorradbekleidung, Arbeitsschutzkleidung sowie als Grundanstrich für technische Artikel wie Planen oder Transportbänder.

Die folgenden Beispiele sollen die Erfindung erläutern ohne sie jedoch einzuschränken.

### I. Beschreibung der Testmethoden

1. UV-Schutz:
   Die Untersuchung erfolgte nach EN 410.
2. Scrub-Test
   Hierbei wird die Abriebfestigkeit der Trockenauflage auf dem textilen Flächengebilde bestimmt. Die Bestimmung erfolgt mit einem Flexometer Typ Scrubb der Firma EMI, Frankreich. Hierbei wird das mit der erfindungsgemäßen Beschichtungsmasse beschichtete textile Flächengebilde mit einer oszillierenden Bürste mit einem vorgegebenen Anpressdruck bearbeitet. Man ermittelt visuell, nach wie vielen Oszillationen die Beschichtung beschädigt ist. Sofern die Beschichtung nach 1000 Cyclen keine Beschädigung aufweist, gilt die Polymerhaftung als sehr gut.
3. Hohensteiner Bechermethode
   Hiermit wird die Atmungsaktiviät der Trockenauflage auf dem textilen Flächengebilde bestimmt.

### II. Herstellungsbeispiele

### Beispiel 1

87,4 Gew.-Teile einer handelsüblichen, wässrigen Polyurethan-Dispersion (40 gew.-%ig) mit einer Glasübergangstemperatur von 0 °C, 1 Gew.-Teil eines handelsüblichen Talgfettethoxylats, 1 Gew.-Teil eines handelsüblichen Silikonentschäumers, 10 Gew.-Teile eines handelsüblichen Siliciumcarbids mit einer BET-Oberfläche von 15 m²/g und 0,6 Gew.-Teile eines handelsüblichen Polyacrylsäure-Ammoniumsalzes wurden in einem Dissolver in der vorstehend genannten Reihenfolge unter Rühren vermischt. Die erhaltene Zusammensetzung wies eine Viskosität (nach Haake) von 3500 ± 500 mPas auf.

Für die Applikation vermischte man 98,0 Gew.-Teile der so hergestellten Zusammensetzung, 0,5 Gew.-Teile eines handelsüblichen Silikonentschäumers, 0,5 Gew.-Teile Ammoniak/Wasser zur Einstellung des pH-Wertes auf 8 bis 9 und 0,5 bis 0,6 Gew.-Teile eines handelsüblichen Polyacrylsäure-Verdickers. Man filtrierte die erhaltene Beschichtungszusammensetzung durch ein 40 mesh-Sieb und trug sie anschließend mit einem Luftrakel auf ein Polyamid-Baumwolle-Gewebe mit einem Flächengewicht von 180 g/m² auf. Der Auftrag erfolgte in einer Menge, dass eine trockene Beschichtung in einer Auflage von 20 g/m² resultierte. Nach dem Aufbringen der Beschichtungsmasse trocknete man 90 s bei 160 °C.

### Vergleichsbeispiel 1

Man stellte eine Beschichtungszusammensetzung wie in Beispiel 1 beschrieben, jedoch ohne Siliciumcarbid her und beschichtete auf die in Beispiel 1 beschriebene Wese ein Polyamid-Baumwolle-Gewebe mit einem Flächengewicht von 180 g/m².

| UV-Absorption: | | | |
|---|---|---|---|
| | UVA transmittance | UVB transmittance | G-Faktor |
| Gewebe aus Beispiel 1 | 2,4 % | 0,8 % | 0,2271 |
| Gewebe Vergleichsbeispiel 1 | 23 % | 9 % | 0,3808 |
| Scrub-Test an erfindungsgemäß beschichtetem Gewebe: 2000 Touren/1 kg Belastung: keine Beschädigung. | | | |

### Beispiel 2

56,5 Gew.-Teile einer handelsüblichen, wässrigen Polyetherurethan-Dispersion (40 gew.-%ig) mit einer Glasübergangstemperatur von 0 °C, 10 Gew.-Teile Wasser, 2 Gew.-Teile eines handelsüblichen Sorbitanfettsäureesters, 1 Gew.-Teil eines handelsüblichen Silikonentschäumers, 30 Gew.-Teile eines handelsüblichen Siliciumcarbids mit einer BET-Oberfläche von 10 m²/g und 0,5 Gew.-Teile eines handelsüblichen Polyacrylsäure-Ammoniumsalz wurden in der vorstehend genannten Reihenfolge in einem Dissolver unter Rühren vermischt. Die Zusammensetzung wies eine Viskosität (nach Haake) von 6000 ± 500 mPas auf.

Für die Applikation vermischte man 99,5 Gew.-Teile der Zusammensetzung aus Beispiel 2 und 0,5 Gew.-Teile eines handelsüblichen Silikonentschäumers. Man filtrierte die erhaltene Beschichtungszusammensetzung durch ein 40 mesh-Sieb und trug sie anschließend mit einem Luftrakel auf ein Kevlar®-Gewebe mit einem Flächengewicht von 350 g/m² auf. Die Beschichtung erfolgte in einer Menge, dass eine trockene Beschichtung in einer Auflage von 50 g/m² resultierte. Nach dem Aufbringen der Beschichtungsmasse trocknete man 2 Minuten bei 170 °C. Die erhaltene Beschichtung wies folgende Eigenschaften auf:

### Vergleichsbeispiel 2

Man stellte eine Beschichtungszusammensetzung wie in Beispiel 2 beschrieben, jedoch ohne Siliciumcarbid her und beschichtete auf die in Beispiel 2 beschriebene Weise ein Kevlar®-Gewebe mit einem Flächengewicht von 350 g/m².

Atmungsaktivität des Gewebes aus Beispiel 2:
Wasserdampfdurchgang (WDD): 15 kg Wasser/m² x 24 Stunden

| UV-Absorption: | | | |
|---|---|---|---|
| | UVA transmittance | UVB transmittance | G-Faktor |
| Gewebe aus Beispiel 2 | 2,1 % | 0,5 % | 0,2152 |
| Gewebe aus Vergleichsbeispiel 2 | 21 % | 7 % | 0,3905 |
| Scrub-Test an Gewebe aus Beispiel 2: 2000 Touren/1 kg Belastung: keine Beschädigung. | | | |

### Beispiel 3

50 Gew.-Teile einer handelsüblichen, wässrigen Polyurethan-Dispersion (40 Gew.-%) mit einer Glasübergangstemperatur von 0 °C, 20 Gew.-Teile einer handelsüblichen Acrylat-Dispersion (50 Gew.-%) mit einer Glasübergangstemperatur von -16 °C, 16 Gew.-Teile handelsüblicher Glashohlkugeln mit einem Außendurchmesser von 30 µm, 2 Gew.-Teile eines handelsüblichen Natriumsalzes eines Sulfobernsteinsäure-C₈-alkylesters, 1 Gew.-Teil eines handelsüblichen Silikonentschäumers, 10 Gew.-Teile handelsübliches Siliciumcarbid mit einer BET-Oberfläche von 5 m²/g und 1 Gew.-Teil eines handelsüblichen Polyacrylsäure-Ammoniumsalzes wurden in einem Dissolver in der vorstehend genannten Reihenfolge unter Rühren vermischt. Die Zusammensetzung wies eine Viskosität (nach Haake) von 5000 ± 500 mPas auf.

Zunächst imprägnierte man ein Polyester-Gewebe mit einem Flächengewicht von 100 g/m² mit Dipolit 480 in einer Konzentration von 10 g/l vor. Für die Applikation vermischte man 97,0 Gew.-Teile der Zusammensetzung aus Beispiel 3, 1 Gew.-Teil eines handelsüblichen Silikonentschäumers und 2 Gew.-Teile eines handelsüblichen Ethylenoxid-Verdickers. Man filtrierte die erhaltene Beschichtungszusammensetzung durch ein 40 mesh-Sieb und trug sie anschließend mit einem Walzenrakel auf. Der Auftrag erfolgte in einer Menge, dass eine trockene Beschichtung in einer Auflage von 60 g/m² resultierte. Nach dem Aufbringen der Beschichtungsmasse trocknete man 120 s progressiv bei 100 °C, 120 °C, 140°C, 160°C, 160 °C und 160 °C.

### Vergleichsbeispiel 3

Man stellte eine Beschichtungszusammensetzung wie in Beispiel 3 beschrieben, jedoch ohne Siliciumcarbid her und beschichtete auf die in Beispiel 3 beschriebene Weise ein Polyester-Gewebe mit einem Flächengewicht von 100 g/m².

| UV-Absorption: | | | |
|---|---|---|---|
| | UVA transmittance | UVB transmittance | G-Faktor |
| Gewebe aus Beispiel 3 | 1,8 % | 0,5 % | 0,1981 |
| Gewebe aus Vergleichsbeispiel 3 | 25 % | 9,8 % | 0,3901 |
| Scrub-Test an Gewebe aus Beispiel 3: 1000 Touren/1 kg Belastung: keine Beschädigung. | | | |

## Patentansprüche

1. Wässrige Beschichtungszusammensetzung für textile Flächengebilde enthaltend:
a) ein Polyurethan in Form einer wässrigen Dispersion von Polymerpartikeln,
b) gegebenenfalls ein oder mehrere davon verschiedene Polymere in Form einer wässrigen Polymerdispersion in einer Menge von 0 bis 100 Gew.-Teilen bezogen auf 100 Gew.-Teile der Komponente a),
c) wenigstens ein keramisches Pulver mit einer Teilchengröße von 0,1 bis 10 µm in einer Menge von 5 bis 150 Gew.-Teilen bezogen auf 100 Gew.-Teile Polymerbestandteile der Komponenten a) plus b),
d) gegebenenfalls Hohlkugeln mit einem Außendurchmesser im Bereich von 5 bis 200 µm in einer Menge von 0 bis 80 Gew.-Teilen bezogen auf 100 Gew.-Teile Polymerbestandteile der Komponenten a) plus b),
e) gegebenenfalls Farbmittel,
f) Wasser, das bis zu 50 Gew.-% mit Wasser mischbare organische Lösungsmittel enthalten kann, sowie gegebenenfalls übliche Hilfsmittel.

2. Zusammensetzung nach Anspruch 1, worin das keramische Pulver eine BET-Oberfläche (nach DIN 66131) im Bereich von 1 bis 50 m²/g aufweist.

3. Zusammensetzung nach Anspruch 1 oder 2, worin das keramische Pulver ausgewählt ist unter Oxiden des Siliciums, Aluminiums, Berylliums, Magnesiums, Zirkoniums, den Carbiden des Siliciums, Wolframs, Vanadiums, Molydäns, Tantals, Bors und Titans sowie den Nitriden des Siliciums, Aluminiums, Titans, Vanadins, Bors und Tantals.

4. Zusammensetzung nach Anspruch 3, worin das keramische Pulver Siliciumcarbid ist.

5. Zusammensetzung nach einem der vorherigen Ansprüche, worin das Polyurethan zu 5 bis 50 Gew.-%, bezogen auf das Gesamtgewicht des Polyurethans a), Polyetherketten der Formel (I) 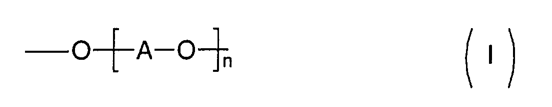 enthält, worin A für C₂-C₄-Alkylen und n für eine Zahl von 10 bis 150 steht.

6. Zusammensetzung nach einem der vorhergehenden Ansprüche, worin das Polyurethan aufgebaut ist aus:
i) 20 bis 60 Gew.-Teilen wenigstens eines Diisocyanats,
ii) 5 bis 50 Gew.-Teilen wenigstens eines Polyetherdiols,
iii) 0 bis 10 Gew.-Teilen eines oder mehrerer aliphatischer und/oder cycloaliphatischer Diole sowie gegebenenfalls
iv) 0 bis 50 Gew.-Teilen eines oder mehrerer Polyesterdiole,
v) 0 bis 5 Gew.-Teilen einer oder mehrerer Verbindungen mit mehr als zwei Isocyanatgruppen,
vi) 0 bis 10 Gew.-Teilen Verbindungen mit zwei Isocyanatgruppen oder zwei Hydroxylgruppen und wenigstens einer weiteren reaktiven funktionellen Gruppe,
wobei die Summe der Gewichtsanteile aller Komponenten 100 Gew.-Teile beträgt.

7. Zusammensetzung nach einem der vorherigen Ansprüche, enthaltend 1 bis 80 Gew.-Teile Hohlkugeln, bezogen auf 100 Gew.-Teile der Polymerbestandteile der Komponenten a) und b).

8. Verfahren zur Herstellung eines beschichteten textilen Flächengebildes, umfassend das Aufbringen einer Zusammensetzung gemäß einem der Ansprüche 1 bis 7 auf einen textilen Träger.

9. Beschichtetes textiles Flächengebilde, das auf einem textilen Träger wenigstens eine Beschichtung aufweist, die
a) wenigstens ein Polyurethan
b) gegebenenfalls ein oder mehrere davon verschiedene Polymere in einer Menge von 0 bis 100 Gew.-Teilen bezogen auf 100 Gew.-Teile des Polyurethans a),
c) wenigstens ein keramisches Pulver mit einer Teilchengröße von 0,1 bis 10 µm in einer Menge von 5 bis 150 Gew.-Teilen bezogen auf 100 Gew.-Teile Polymerbestandteile der Komponenten a) plus b),
d) gegebenenfalls Hohlkugeln mit einem Außendurchmesser von 5 bis 200 µm in einer Menge von 0 bis 80 Gew.-Teilen bezogen auf 100 Gew.-Teile Polymerbestandteile der Komponenten a) plus b),
e) gegebenenfalls Farbmittel und
f) gegebenenfalls übliche Hilfsmittel enthält.

10. Flächengebilde nach Anspruch 9, wobei die Beschichtung eine Stärke von 2 bis 200 g/m² aufweist.
